(19) Europäisches Patentamt
European Patent Office
Office européen des brevets

(11) Veröffentlichungsnummer: **0 219 459 B1**

# (12) EUROPÄISCHE PATENTSCHRIFT

(45) Veröffentlichungstag der Patentschrift: **01.08.90**

(51) Int. Cl.[5]: **C07C 69/732,** C07C 235/34, C08K 5/10, C07C 323/53

(21) Anmeldenummer: **86810441.5**

(22) Anmeldetag: **06.10.86**

## (54) Substituierte p-Hydroxyphenylverbindungen.

(30) Priorität: **11.10.85 CH 4399/85**

(43) Veröffentlichungstag der Anmeldung: **22.04.87 Patentblatt 87/17**

(45) Bekanntmachung des Hinweises auf die Patenterteilung: **01.08.90 Patentblatt 90/31**

(84) Benannte Vertragsstaaten: **BE DE FR GB IT NL SE**

(56) Entgegenhaltungen:
**US-A- 4 093 587**

**CHEMICAL ABSTRACTS, Band 101, 1984, Seiten 38,39, Zusammenfassung Nr. 8213w, Columbus, Ohio, US; & JP-A-59 25 826 (ADEKA ARGUS CHEMICAL CO., LTD) 09-02-1984**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Orban, Ivan, Dr., Lehenmattstrasse 216, CH-4052 Basel(CH)**
Erfinder: **Meier, Hans-Rudolf, Dr., Rte du Confin 54, CH-1723 Marly(CH)**
Erfinder: **Dubs, Paul, Dr., Route des Pralettes 25, CH-1723 Marly(CH)**
Erfinder: **Evans, Samuel, Dr., Route des Charnonnières 17, CH-1723 Marly(CH)**
Erfinder: **Hofmann, Peter, Dr., Lerchenstrasse 57, CH-4059 Basel(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft neue 3-Cycloalkyl-4-hydroxyphenylderivate, ihre Verwendung und das mit ihrer Hilfe gegen thermooxidativen und/oder lichtinduzierten Abbau stabilisierte organische Material.

Die Verwendung von sterisch gehinderten Phenolen zum Stabilisieren von organischem Material ist seit langem bekannt. Zum Beispiel wird in der polnischen Patentschrift 119 695 ein aus 3 Komponenten bestehendes Stabilisatorengemisch beschrieben, das als eine Komponente ein p-Hydroxyphenylderivat enthält. In der japanischen Patentschrift Kokai Sho 59-25826 werden Diester beschrieben, die zwei sterisch gehinderte p-Hydroxyphenylgruppen besitzen. In der britischen Patentschrift 1 299 591 werden Carbonsäureamide beschrieben, die sterisch gehinderte p-Hydroxyphenylgruppen enthalten. Aus der US-A 4 093 587 sind trisubstituierte Hydroxyphenylcarbonsäureester und -carbonsäureamide sowie deren Verwendung als Stabilisatoren bekannt.

Es wurde nun gefunden, daß ganz spezielle Carbonsäureester und Carbonsäureamide, die eine 3-Cycloalkyl-4-hydroxyphenylgruppe enthalten, in ihrer Wirkung als Stabilisatoren besonders vorteilhaft sind.

Gegenstand der Erfindung sind Verbindungen der allgemeinen Formel I,

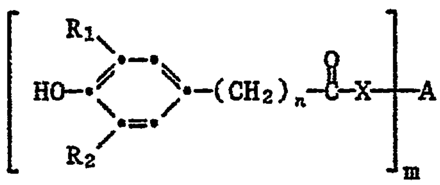

(I)

worin $R_1$ und $R_2$ unabhängig voneinander unsubstituiertes oder durch $C_1$-$C_3$-Alkyl substituiertes $C_5$-$C_7$-Cycloalkyl sind und $R_2$ ferner $C_1$-$C_{12}$-Alkyl, Phenyl, unsubstituiertes oder im Phenylring durch -OH und/oder $-OCH_3$ und/oder $C_1$-$C_{12}$-Alkyl substituiertes $C_7$-$C_{10}$-Phenylalkyl bedeutet, X Sauerstoff oder $-N(R_3)-$ ist, $R_3$ Wasserstoff, $C_1$-$C_4$-Alkyl oder Phenyl bedeutet, n 0, 1 oder 2 ist, m eine ganze Zahl zwischen 1 und 4 bedeutet und wenn m 1 ist, A $C_8$-$C_{20}$-Alkyl bedeutet, wenn m 2 ist, A $C_2$-$C_{18}$-Alkylen oder durch -O-, -S-, $-N(R_3)-$ oder -NH-COCO-NH- unterbrochenes $C_2$-$C_{18}$-Alkylen oder wenn X $-N(R_3)-$ ist, zusätzlich eine direkte Bindung oder eine Gruppe der Formel II, III oder IV bedeutet,

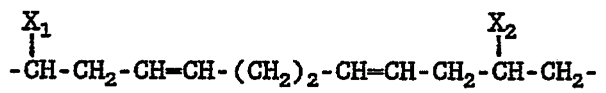

(II)

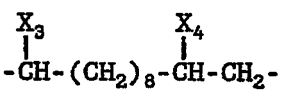

(III)

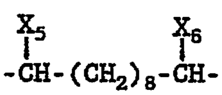

(IV)

worin $X_1$ $C_1$-$C_{12}$-Alkyl, Cyclohexyl, Phenyl, Benzyl oder Tetrahydrofuryl ist, $X_2$ und $X_4$ $C_1$-$C_{12}$-Alkyl sind, $X_3$ $C_1$-$C_{12}$-Alkyl, Cyclohexyl, Phenyl, durch $C_1$-$C_4$-Alkyl und/oder -OH substituiertes Phenyl, Piperidyl oder Tetrahydrofuryl bedeutet und $X_5$ und $X_6$ unabhängig voneinander $C_1$-$C_{12}$-Alkyl, Cyclohexyl, Benzyl, Phenyl, durch $C_1$-$C_4$-Alkyl und/oder -OH substituiertes Phenyl oder Naphthyl sind, wenn m 3 ist, A einen trivalenten aliphatischen Kohlenwasserstoffrest mit 3 bis 7 Kohlenstoffatomen bedeutet und wenn m 4 ist, A einen tetravalenten aliphatischen Kohlenwasserstoffrest mit 4 bis 10 Kohlenstoffatomen bedeutet.

$R_1$ und $R_2$ als unsubstituiertes oder durch $C_1$-$C_3$-Alkyl substituiertes $C_5$-$C_7$-Cycloalkyl bedeuten beispielsweise Cyclopentyl, Cyclohexyl, Cycloheptyl oder α-Methylcyclohexyl.

$R_2$, $X_1$, $X_2$, $X_3$, $X_4$, $X_5$ und $X_6$ bedeuten als $C_1$-$C_{12}$-Alkyl z.B. Methyl, Ethyl, Propyl, Isopropyl, sec-Butyl, tert-Butyl, tert-Pentyl, Hexyl, 2-Ethylhexyl, Decyl oder Dodecyl. Bevorzugt sind Alkylreste, die in α-Stellung verzweigt sind. Ebenfalls bevorzugt ist $C_1$-$C_5$-Alkyl, insbesondere Methyl, Isopropyl und tert-Butyl.

$R_2$ als unsubstituiertes oder im Phenylring durch -OH und/oder $-OCH_3$ und/oder $C_1$-$C_{12}$-Alkyl substituiertes $C_7$-$C_{10}$-Phenylalkyl ist beispielsweise, Benzyl, 2-Phenylethyl, 1-Phenylethyl, 1-Methyl-1-phenylethyl, 3,5-Dimethyl-4-hydroxybenzyl, Hydroxybenzyl oder Methoxybenzyl.

$R_3$ als $C_1$-$C_4$-Alkyl bedeutet z.B. Methyl, Ethyl, Propyl oder Butyl.

$R_3$ ist bevorzugt Wasserstoff.

$X_3$, $X_5$ und $X_6$ bedeuten als Phenyl, welches durch $C_1$-$C_4$-Alkyl und/oder -OH substituiert ist z.B. 3,5-Dimethyl-4-hydroxyphenyl.

Ist m = 1, so bedeutet A als geradkettiges oder verzweigtes $C_8$-$C_{20}$-Alkyl z.B. 2-Ethylhexyl, n-Octyl, 1,1,3,3-Tetramethylbutyl, n-Decyl, n-Dodecyl, n-Hexadecyl oder n-Octadecyl. Bevorzugt ist $C_{12}$-$C_{18}$-Alkyl und besonders bevorzugt ist n-Octadecyl.

Ist m = 2, so bedeutet A als geradkettiges oder verzweigtes $C_2$-$C_{18}$-Alkylen z.B. Dimethylen, Trimethylen, Tetramethylen, Hexamethylen, 2,2-Dimethyltrimethylen, Octamethylen, Nonamethylen, Decamethylen, Dodecamethylen oder Octadecamethylen. Bevorzugt ist $C_2$-$C_6$-Alkylen. Ist die Alkylengruppe durch -O-, -S-, -N($R_3$)- oder -NH-COCO-NH-unterbrochen, so bedeutet A beispielsweise 2-Thiapropylen-1,3; 3-Thiapentylen-1,5; 4-Oxaheptamethylen-1,7; 3,6-Dioxaoctamethylen-1,8; 3,6-Diazaoctamethylen-1,8 oder eine Gruppe $-(CH_2)_2$-NHCOCONH-$(CH_2)_2$-. Bevorzugt sind die Gruppen $-(CH_2)_2-S-(CH_2)_2-$, $-(CH_2)_2-O-(CH_2)_2-O-(CH_2)_2-$ und Hexamethylen.

Ist m = 2, so bedeutet A als eine Gruppe der Formel II z.B.

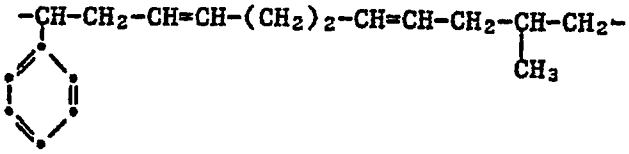

oder

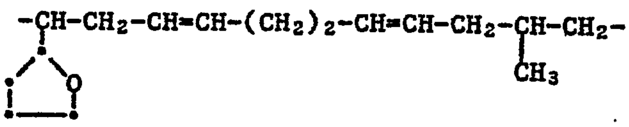

;

als eine Gruppe der Formel III z.B.

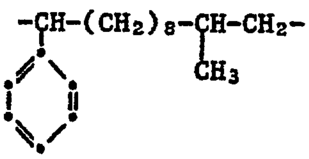

,

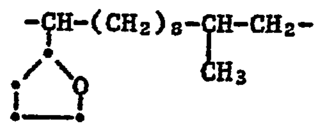

,

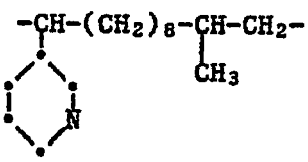

oder

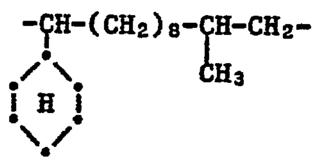

und als eine Gruppe der Formel IV z.B.

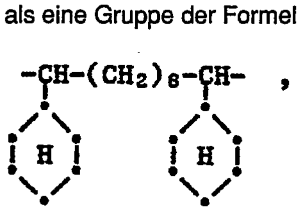

,

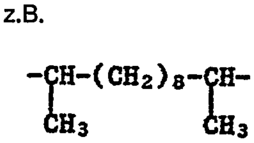

oder

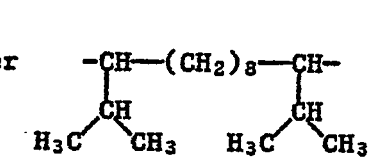

Im Falle von m = 3 ist A als trivalenter aliphatischer Kohlenwasserstoffrest mit 3 bis 7 Kohlenstoffatomen beispielsweise $C_3$-$C_7$-Alkantriyl, insbesondere

$-CH_2-\overset{|}{C}H-CH_2-$, $-CH_2-CH_2-\overset{|}{C}H-CH_2-$, $-CH_2-CH_2-\overset{|}{C}H-CH_2-CH_2-$,

$-CH_2-CH_2-\overset{|}{C}H-CH_2-CH_2-CH_2-$, $-CH_2-CH_2-CH_2-\overset{|}{C}H-CH_2-CH_2-CH_2-$,

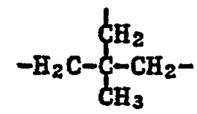 oder 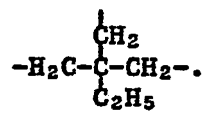.

Im Falle von m = 4 ist A als tetravalenter aliphatischer Kohlenwasserstoffrest mit 4 bis 10 Kohlenstoffatomen z.B. $C_4$-$C_{10}$-Alkantetrayl, insbesondere Pentaerythrityl,

$-CH_2-\overset{|}{C}H-\overset{|}{C}H-CH_2-$, $-CH_2-CH_2-\overset{|}{C}H-\overset{|}{C}H-CH_2-$, $-CH_2-CH_2-\overset{|}{C}H-\overset{|}{C}H-CH_2-CH_2-$,

$-CH_2-CH_2-\overset{|}{C}H-CH_2-\overset{|}{C}H-CH_2-$ oder $-CH_2-CH_2-\overset{|}{C}H-CH_2-CH_2-\overset{|}{C}H-CH_2-CH_2-$.

Pentaerythrityl ist bevorzugt.

Bevorzugt sind die Gruppen der Formeln II, III oder IV, worin $X_1$ Phenyl oder Tetrahydrofuryl ist, $X_2$ und $X_4$ $C_1$-$C_4$-Alkyl sind, $X_3$ $C_1$-$C_4$-Alkyl, Cyclohexyl, Phenyl, Piperidyl oder Tetrahydrofuryl bedeutet und $X_5$ und $X_6$ unabhängig voneinander $C_1$-$C_4$-Alkyl oder Cyclohexyl sind.

Besonders bevorzugt sind Verbindungen der Formel I, worin für den Fall m = 2, A $C_2$-$C_{18}$-Alkylen oder durch -O-, -S-, -N($R_3$)- oder -NH-COCO-NH- unterbrochenes $C_2$-$C_{18}$-Alkylen oder wenn X -N($R_3$)- ist, zusätzlich eine direkte Bindung bedeutet.

Von Interesse sind Verbindungen der Formel I, worin $R_1$ und $R_2$ unabhängig voneinander unsubstituiertes oder durch $C_1$-$C_3$-Alkyl substituiertes $C_5$-$C_7$-Cycloalkyl sind und für den Fall m = 2, A $C_2$-$C_{18}$-Alkylen oder durch -O-, -S-, -N($R_3$)- oder -NH-COCO-NH- unterbrochenes $C_2$-$C_{18}$-Alkylen oder wenn X -N($R_3$)- ist, zusätzlich eine direkte Bindung bedeutet.

Ebenfalls von Interesse sind Verbindungen der Formel I, worin X Sauerstoff oder -NH-bedeutet und für den Fall m = 1, A $C_{12}$-$C_{18}$-Alkyl bedeutet und für den Fall m = 2, A $C_2$-$C_6$-Alkylen oder durch -O-, -S-, -NH- oder -NH-COCO-NH- unterbrochenes $C_2$-$C_6$-Alkylen oder wenn X -NH- ist, eine direkte Bindung bedeutet.

Weiterhin bevorzugt sind Verbindungen der Formel I, worin X Sauerstoff oder -NH- ist und für den Fall m = 2, A 2,2-Dimethyltrimethylen, $-(CH_2)_2-S-(CH_2)_2-$, $-(CH_2)_2-O-(CH_2)_2-O-(CH_2)_2-$, $-(CH_2)_2-NH-COCO-NH-(CH_2)_2-$, Hexamethylen oder wenn X -NH- ist, eine direkte Bindung bedeutet.

Bevorzugt sind auch solche Verbindungen der Formel I, worin $R_1$ und $R_2$ unabhängig voneinander Cyclohexyl oder α-Methylcyclohexyl sind und $R_2$ ferner $C_1$-$C_5$-Alkyl oder Phenyl bedeutet.

Ebenfalls bevorzugt sind Verbindungen der Formel I, worin $R_1$ Cyclohexyl ist und $R_2$ Cyclohexyl, $C_1$-$C_5$-Alkyl oder Phenyl, insbesondere Cyclohexyl oder Methyl, bedeutet.

Von besonderem Interesse sind Verbindungen der Formel I, worin für den Fall m = 1, A $C_{12}$-$C_{18}$-Alkyl bedeutet und für den Fall m = 2, A $C_2$-$C_6$-Alkylen bedeutet.

Ebenfalls von Interesse sind Verbindungen der Formel I, worin $R_1$ Cyclohexyl ist, $R_2$ Cyclohexyl oder Methyl bedeutet, X Sauerstoff oder -NH- ist, n 2 bedeutet und m 1, 2 oder 4 ist und wenn m 1 ist, A Octadecyl bedeutet, wenn m 2 ist, A $-(CH_2)_2-S-(CH_2)_2-$, $-(CH_2)_2-O-(CH_2)_2-O-(CH_2)_2-$ oder Hexamethylen bedeutet und wenn m 4 ist, A $C(CH_2-)_4$ bedeutet.

n ist bevorzugt 2. m ist bevorzugt 4, besonders bevorzugt 2 und ganz besonders bevorzugt 1. X bedeutet bevorzugt Sauerstoff. $R_1$ und $R_2$ bedeuten besonders bevorzugt Cyclohexyl.

Beispiele für Verbindungen der Formel I sind:

n-Octadecyl-3-(3,5-dicyclohexyl-4-hydroxyphenyl)propionat
1,6-Bis[3-(3,5-dicyclohexyl-4-hydroxyphenyl)propionyloxy]hexan
1,5-Bis[3-(3,5-dicyclohexyl-4-hydroxyphenyl)propionyloxy]-3-thiapentan
N,N'-Bis[3-(3,5-dicyclohexyl-4-hydroxyphenyl)propionyl]-1,3-diaminopropan
N,N'-Bis[3-(3,5-dicyclohexyl-4-hydroxyphenyl)propionyl]-1,6-diaminohexan
Bis[3-(3,5-dicyclohexyl-4-hydroxyphenyl)propionyl]hydrazin
1,8-Bis[3-(3,5-dicyclohexyl-4-hydroxyphenyl)propionyloxy]-3,6-dioxaoctan
Bis[2-(3,5-dicyclohexyl-4-hydroxyphenyl)propionyloxy)ethylamino]-oxalat
Tetrakis[3-(3,5-dicyclohexyl-4-hydroxyphenyl)propionyloxymethyl]-methan
n-Octadecyl-3-(3-cyclohexyl-4-hydroxy-5-methylphenyl)propionat
1,6-Bis[3-(3-cyclohexyl-4-hydroxy-5-methylphenyl)propionyloxy]-hexan
1,8-Bis[3-(3-cyclohexyl-4-hydroxy-5-methylphenyl)propionyloxy]-3,6-dioxaoctan
1,5-Bis[3-(3-cyclohexyl-4-hydroxy-5-methylphenyl)propionyloxy]-3-thiapentan.

Besonders bevorzugt sind n-Octadecyl-3-(3,5-dicyclohexyl-4-hydroxyphenyl)propionat, 1,6-Bis[3-(3,5-dicyclohexyl-4-hydroxyphenyl)propionyloxy]hexan und Tetrakis[3-(3,5-dicyclohexyl-4-hydroxyphenyl)-propionyloxymethyl]methan.

Die erfindungsgemässen Verbindungen eignen sich zum Stabilisieren von organischem Material, wie beispielsweise

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.
2. Mischungen der unter 1) genannten Polymeren, z.B. Mischungen von Polypropylen mit Polyisobutylen.
3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.
4. Polystyrol, Poly-(p-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinsäureanhydrid, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Ethylen-Propylen-DienTerpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS, MBS, ASA oder AES-Polymere bekannt sind.
7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere wie z.B. Ethylenoxid, enthalten.
13. Polyphenyloxide und -sulfide und deren Mischungen mit Styrolpolymeren.
14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylenisophthalamid, sowie deren Block-Copolymere mit Polyethern wie z.B. mit Polyethylenglykol, Polypropylenglykol oder Polytetramethylenglykol.
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin

andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrigen Emulsionen.

29. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung ist daher organisches Material enthaltend mindestens eine Verbindung der Formel I.

Bei dem organischen Material handelt es sich vorzugsweise um synthetische Polymere, wie z.B. Polyolefine, Polystyrol oder Copolymere von Styrol. Polyolefine sind besonders bevorzugt.

Im allgemeinen werden die erfindungsgemässen Verbindungen dem zu stabilisierenden organischen Material in Mengen von 0,01 bis 10%, vorzugsweise 0,01 bis 5%, insbesondere 0,05 bis 0,5 %, bezogen auf das Gesamtgewicht des zu stabilisierenden Materials, zugesetzt.

Für die Stabilisierung von organischem Material ist es besonders vorteilhaft, die erfindungsgemässen Verbindungen zusammen mit sogenannten Thiosynergisten einzusetzen. Thiosynergisten sind als sekundäre Antioxidantien oder Peroxidzerstörer bekannt und gehören u.a. zu den folgenden Substanzklassen: Mercaptane, Thioether, Disulfide, Dithiocarbamate und heterocyclische Thioverbindungen. Beispiele für Thiosynergisten sind die folgenden Verbindungen:

Pentaerythrit-tetrakis[(β-alkylmercapto)propionat] wie beispielsweise Pentaerythrit-tetrakis[(β-dodecylmercapto)propionat];

Pentaerythrit-tetrakis(mercaptoacetat), 1,1,1-Trimethylolethan-tris-(mercaptoacetat),1,1,1-Trimethylolpropan-tris(mercaptoacetat), Dioleyl-3,3'-thiodipropionat, Dilauryl-3,3'-thiodipropionat, Ditridecyl-3,3'-thiodipropionat, Dimyristyl-3,3'-thiodipropionat, Distearyl-3,3'-thiodipropionat, Dicyclohexyl-3,3'-thiodipropionat, Dicetyl-3,3'-thiodipropionat, Dioctyl-3,3'-thiodipropionat, Dibenzyl-3,3'-thiodipropionat, Laurylmyristyl-3,3'-thiodipropionat, Diphenyl-3,3'-thiodipropionat, Di-p-methoxyphenyl-3,3'-thiodipropionat, Didecyl-3,3'-thiodipropionat, Dibenzyl-3,3'-thiodipropionat, Diethyl-3,3'-thiodipropionat, 3-Methylmercaptopropionsäurelaurylester, 3-Butylmercaptopropionsäurelaurylester, 3-Laurylmercaptopropionsäurelaurylester, 3-Octylmercaptopropionsäurephenylester, 3-Phenylmercaptopropionsäurelaurylester, 3-Benzylmercaptopropionsäurelaurylester, 3-(p-Methoxy)phenylmercaptopropionsäurelaurylester, 3-Cyclohexylmercaptopropionsäurelaurylester, 3-Hydroxymethylmercaptopropionsäurelaurylester, 3-Hydroxyethylmercaptopropionsäuremyristylester, 3-Methoxymethylmercaptopropionsäureoctylester, 3-Hydroxymethylmercaptopropionsäurelaurylester, 3-Hydroxyethylmercaptopropionsäuremyristylester, 3-Methoxymethylmercaptopropionsäureoctylester, 3-Carboxymethylmercaptopropionsäuredilaurylester, 3-Carboxypropylmercaptopropionsäuredilaurylester, Dilauryl-4,7-dithiasebacat, Dilauryl-4,7,8,11-tetrathiatetradecandioat, Dimyristyl-4,11-dithiatetradecandioat, Lauryl-3-benzthiazylmercaptopropionat;

Dialkyldisulfide wie beispielsweise Dioctyldisulfid, Didodecyldisulfid, Dioctadecyldisulfid; Dialkylsulfide wie z.B. Didodecylsulfid, Dioctadecylsulfid; Alkylthiopropionsäuren und deren Salze wie beispielsweise 3-Laurylmercaptopropionsäure und dessen Calciumsalz oder die in den japanischen Offenlegungsschriften Sho 47-13 533, Sho 47-24004, Sho 47-24 541 und Sho 47-24 005 beschriebenen schwefelhaltigen Verbindungen.

Bevorzugt werden die erfindungsgemässen Verbindungen zusammen mit den Lauryl- oder Stearylestern der β-Thio-dipropionsäure oder 3-Laurylmercaptopropionsäure oder dessen Calciumsalz eingesetzt.

Besonders bevorzugt als Thiosynergist ist Dioctadecyldisulfid.

Das Gewichtsverhältnis von Thiosynergist zu erfindungsgemässem Stabilisator kann beispielsweise 1:1 bis 20:1, bevorzugt 2:1 bis 10:1 und besonders bevorzugt 3:1 bis 7:1 betragen.

Die Erfindung betrifft daher auch organisches Material enthaltend mindestens eine Verbindung der Formel I und einen Thiosynergisten.

Die stabilisierten Polymerzusammensetzungen der Erfindung können wahlweise auch weitere herkömmliche Additive enthalten, wie beispielsweise:

1. Antioxidantien

1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether

2,2'-Thio-bis(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5 Benzylverbindungen

1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat

1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
Calcium-salz des 3,5-Di-tert.butyl-4-hydroxybenzyl-phosphonsäuremonoethylesters.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert.butyl-4-hydroxy-3-methylphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β-(3,5-Di-tert.butyl-4-hydroxyphenyl)-propionsäure, wie z.B.

N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2' , 4'-Trihydroxy-, 2'-Hydroxy-4,4'-dimethoxy-Derivat.

2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester,
N-(β-Carbomethoxy-β-cyanovinyl)-2-methyl-indolin,

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat
Bis-(1,2,2,6,6-pentamethylpiperidyl)-sebacat
n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin,
Tris-(2,2,6,6-tetramethyl-4-piperidyl)-nitrilotriacetat,

Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyloxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von ortho- und para-Methoxy- sowie von o- und p-Ethoxy-di-substituierte Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert. butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, optische Aufheller, Flammschutzmittel, Antistatika, Treibmittel.

Die Einarbeitung der erfindungsgemässen Stabilisatorsubstanzen und allenfalls weiterer Zusätze in das organische Material erfolgt nach bekannten Methoden. Sie kann beispielsweise durch Einmischen der erfindungsgemässen Produkte und gegebenenfalls weiterer Additive nach den in der Technik üblichen Methoden, vor oder während der Formgebung, oder auch durch Aufbringen der gelösten oder dispergierten Verbindungen auf das Polymer, gegebenenfalls unter nachträglichem Verdunsten des Lösungsmittels, erfolgen. Die erfindungsgemässen Produkte können auch in Form eines Masterbatches, der diese beispielsweise in einer Konzentration von 2,5 bis 25 Gew.-% enthält, den zu stabilisierenden Materialien zugesetzt werden. Die erfindungsgemässen Produkte können auch vor oder während der Polymerisation oder vor der Vernetzung zugegeben werden.

Im allgemeinen werden die verschiedenen herkömmlichen Additive dem zu stabilisierenden organischen Material in Mengen von 0,01 bis 10%, bevorzugt 0,01 bis 5%, bezogen auf das Gesamtgewicht des zu stabilisierenden Materials, zugesetzt.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die Erfindung betrifft auch die Verwendung von Verbindungen der Formel I zum Stabilisieren von organischem Material gegen thermooxidativen und/oder lichtinduzierten Abbau.

Die Verbindungen der Formel I können auf an sich bekannte Weise, z.B. wie in GB-A-996 502, GB-A-1 299 591 und US-A-3 330 859 beschrieben, hergestellt werden, indem man eine Verbindung der Formel V

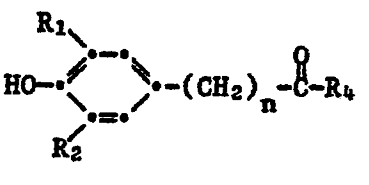 (V)

worin $R_1$, $R_2$ und n die oben angegebenen Definitionen besitzen und $R_4$ z.B. Halogen, -OH oder $C_1$-$C_5$-Alkoxy, bevorzugt -Cl, $-OCH_3$ oder $-OC_2H_5$ bedeutet, mit einem entsprechenden Alkohol oder Amin der Formel VI,

$$[H{-}X{-}]_m{-}A \qquad (VI)$$

worin A, X und m die oben angegebenen Bedeutungen haben, in Gegenwart eines geeigneten Katalysators umsetzt. Als Umesterungskatalysatoren seien z.B. genannt: Dibutylzinnoxid, Lithiumamid, Kaliumhydroxid und Tetrabutyltitanat.

Umesterungen können in der Schmelze oder in einem geeigneten aprotischen Lösungsmittel, wie beispielsweise Toluol oder Xylol, stattfinden.

Die Reaktionstemperatur liegt beispielsweise zwischen 100 und 200°C, bevorzugt 120 und 180°C.

Wird ein Säurechlorid der Formel V mit einem entsprechenden Alkohol oder Amin umgesetzt, so findet die Reaktion zweckmässigerweise bei Raumtemperatur in einem geeigneten Lösungsmittel, z.B. Methylenchlorid, Toluol oder Xylol statt.

Die Ausgangsprodukte sind bekannt, teilweise im Handel erhältlich, oder können in Analogie zu bekannten Verfahren hergestellt werden.

Wenn A in der Formel I eine Gruppe der Formel II, III oder IV ist, so können die entsprechenden Amine, beispielsweise wie in EP-A-85 653, US-A-4 506 099 und US-A-4 100 111 beschrieben, hergestellt werden.

Die für die Herstellung der Verbindungen der Formel V benötigten Phenole können z.B. in Analogie zu dem in US-A-3 093 587 beschriebenen Verfahren erhalten werden.

Die folgenden Beispiele erläutern die Erfindung weiter. Alle Mengenangaben entsprechen Gewichtsteilen soweit nicht anders angegeben.

<u>Beispiel 1:</u>

A) Herstellung von 3-(3,5-Dicyclohexyl-4-hydroxyphenyl)propionsäuremethylester

Bei Raumtemperatur werden in einem Autoklaven (2,5 l) aus rostfreiem Stahl nacheinander 722,4 g 2,6-Dicyclohexylphenol (2,8 Mol), 375 g tert-Butanol und 30 g Kalium-tert-butylat (0,268 Mol) vorgelegt. Der Autoklav wird verschlossen und der Inhalt unter Rühren zunächst auf 90°C erwärmt. Bei 90°C werden innerhalb von ca. 10 Minuten 482,3 g Acrylsäuremethylester (5,6 Mol) zugegeben. Das Gemisch wird auf 133-135°C erwärmt und 18 Stunden bei dieser Temperatur weitergerührt. Der Druck bleibt konstant und beträgt ca. 10 bar. Der Autoklaveninhalt wird auf 80°C abgekühlt und das Kalium-tertbutylat wird durch Zugabe von 26 g Eisessig (0,4 Mol) neutralisiert. Die flüchtigen Anteile des Reaktionsgemisches werden mit Hilfe eines Rotationsverdampfers bei 85°C und 20 mbar entfernt.

Die Ausbeute an Rohprodukt beträgt 1217 g. Das Rohprodukt enthält 800 g Produkt, 120 g 2,6-Dicyclohexylphenol, 27 g Kaliumacetat und ausserdem noch oligomerisierte Acrylsäuremethylester.

Das Rohprodukt wird in der dreifachen Menge wässrigen Methanols (99%-ig) zweimal umkristallisiert. Das reine Produkt liegt als farbloses Kristallpulver vor und besitzt einen Schmelzpunkt von 118°C.

B) Herstellung von 3-(3,5-Dicyclohexyl-4-hydroxyphenyl)propionsäureoctadecylester

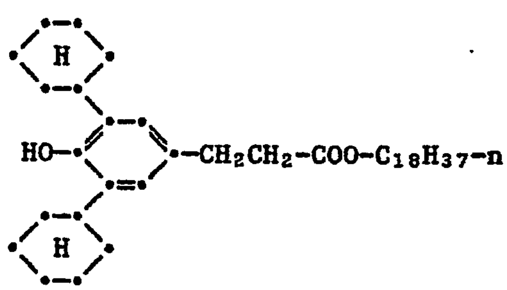

In einem 750 ml Kolben mit Tropftrichter und Destillationskühler werden nacheinander 137,6 g 3-(3,5-Dicyclohexyl-4-hydroxyphenyl)propionsäuremethylester (0,4 Mol), 110,2 g Octadecanol (0,407 Mol), 350 g Toluol und 0,6 g Dibutylzinnoxid (0,0024 Mol) vorgelegt.

Das Gemisch wird unter Rühren aufgeheizt. Bei einer Innentemperatur von 113°C beginnt das während der Reaktion gebildete Methanol zusammen mit dem Toluol in die Vorlage zu destillieren. Die Innentemperatur erhöht sich auf 150°C. Bei dieser Temperatur wird die Destillation 6 Stunden fortgesetzt, wobei das Flüssigkeitsvolumen im Destillationskolben durch Zugabe von Toluol konstant gehalten wird. Die Reaktionslösung wird geklärt und anschliessend am Rotationsverdampfer bei 140°C und 1 mbar eingedampft.

Die Ausbeute an Rohprodukt beträgt 225 g. Das Rohprodukt wird in 800 g Ethanol umkristallisiert. Das reine Produkt liegt als farbloses bis leicht beiges Kristallpulver vor und besitzt einen Schmelzpunkt von 44°C.

<u>Elementaranalyse:</u>

Berechnet: C 80,36 %; H 11,41 %; O8,23 %
Gefunden: C 80,3 %; H 11,1 %; O 8,2 %

$^1$H-NMR:

Ester-$CH_2$-Signal in $CDCl_3$:
δ = 4,06 ppm (Triplett; Kopplungskonstante J = 6,5 Hz)
(δ bezieht sich auf TMS = 0)

Beispiel 2: Herstellung von 1,6-Bis[3-(3,5-dicyclohexyl-4-hydroxyphenyl)propionyloxy]hexan

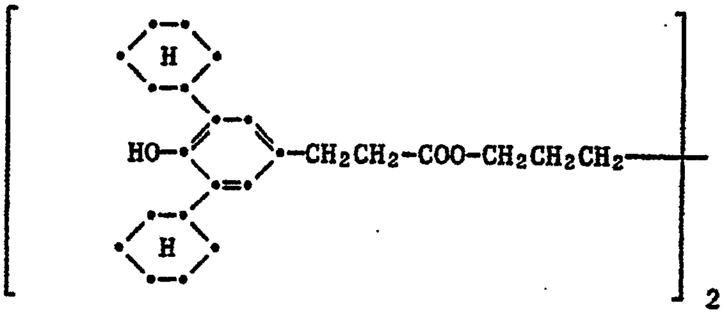

9,27 g 3-(3,5-Dicyclohexyl-4-hydroxyphenyl)propionsäuremethylester; 1,53 g 1,6-Hexandiol und 0,05 g Dibutylzinnoxid werden in einer Apparatur mit Destillationsaufsatz unter Stickstoff 20 Stunden bei 533 mbar auf 130°C erhitzt. Das entstehende Methanol wird laufend abdestilliert. Die Ausbeute an Rohprodukt beträgt 9,7 g. Nach chromatographischer Reinigung (Kieselgel) erhält man 5,7 g eines farblosen Pulvers, das einen Schmelzpunkt von 113-115°C besitzt.

Elementaranalyse:

Berechnet: C 77,59 %; H 9,50 %
Gefunden: C 77,43 %; H 9,43 %

$^1$H-NMR

Ester-$CH_2$-Signal in $CDCl_3$:
δ = 4,06 ppm (Triplett; Kopplungskonstante J = 6,5 Hz)
(δ bezieht sich auf TMS = 0)

Beispiel 3: Herstellung von 1,8-Bis[3-(3,5-dicyclohexyl-4-hydroxyphenyl)propionyloxy]-3,6-dioxaoctan

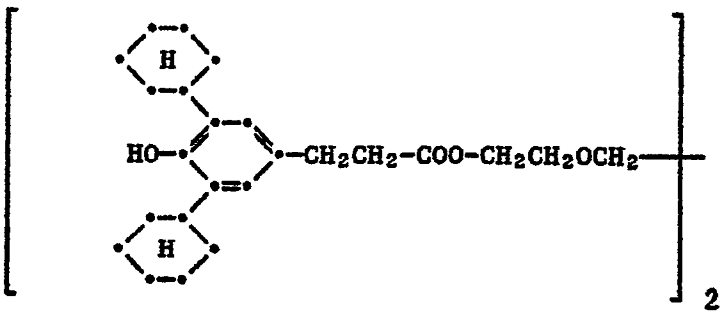

53,3 g 3-(3,5-Dicyclohexyl-4-hydroxyphenyl)propionsäuremethylester; 11,6 g Triethylenglykol und 0,2 g Lithiumamid werden in einer Apparatur mit Destillationsaufsatz unter Stickstoff 24 Stunden bei 533 mbar auf 130°C erhitzt. Die Ausbeute an Rohprodukt beträgt 59,1 g. Nach chromatographischer Reinigung (Kieselgel) erhält man ein gelbes Oel.

Elementaranalyse:

Berechnet: C 74,38 %; H 9,10 %
Gefunden: C 74,01 %; H 9,16 %

$^1$H-NMR:

Ester-$CH_2$-Signal in $CDCl_3$:
δ = 4,25 ppm (Triplett; Kopplungskonstante J = 5 Hz)
(δ bezieht sich auf TMS = 0)

Beispiel 4: Herstellung von Tetrakis[3-(3,5-dicyclohexyl-4-hydroxyphenyl)propionyloxymethyl]methan

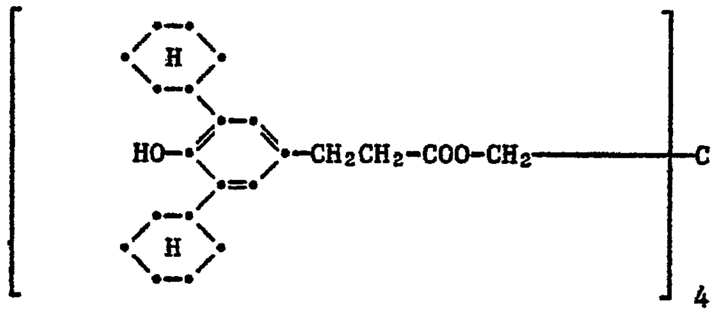

In einem Kolben, welcher mit einem auf 80°C beheizten Dephlegmator versehen ist, werden 1533 g 3-(3,5-Dicyclohexyl-4-hydroxyphenyl)propionsäuremethylester und 165 g Pentaerythrit vorgelegt und auf 120°C erwärmt. Nach Zugabe von 4,8 g Dibutylzinnoxid wird das Gemisch unter Stickstoff bei 250 mbar auf 200°C erhitzt. Dabei wird Methanol in eine Vorlage abdestilliert und das Vakuum innerhalb von 2 Stunden auf 2 mbar verbessert. Die erhaltene Schmelze wird auf ein Blech gegossen und nach dem Erstarren zerkleinert.

Man erhält ein gelbliches Granulat, das einen Schmelzpunkt von 122°C besitzt. ie Ausbeute beträgt 1520 g.

Elementaranalyse:

Berechnet: C 77,13 %; H 9,02 %
Gefunden: C 77,43 %; H 9,10 %

$^1$H-NMR:

Ester-$CH_2$-Signal in $CDCl_3$:
δ = 3,95 ppm (Singlett)
(δ bezieht sich auf TMS = 0)

Massenspektrum (Angabe in m/z):

1384 (Molekülionenpeak)

Beispiel 5: Herstellung von N,N'-Bis[3-(3,5-dicyclohexyl-4-hydroxyphenyl)propionyl]-1,6-diaminohexan

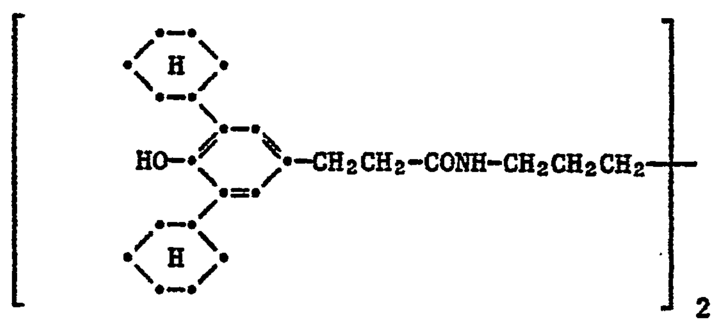

11,6 g 1,6-Diaminohexan werden unter Stickstoff auf 175°C erwärmt. Dann werden 0,2 g Essigsäure zugegeben. Zu diesem Gemisch gibt man nun innerhalb von einer Stunde 68,9 g 3-(3,5-Dicyclohexyl-4-hydroxyphenyl)propionsäuremethylester. Das Reaktionsgemisch wird weitere 3 Stunden auf 175°C erwärmt. In einem Mixer wird das Gemisch mit 100 ml 1%-igem wässrigem Natriumbicarbonat verrührt. Der

erhaltene Feststoff wird abgesaugt und mit Wasser neutral gewaschen. Nach der Trocknung erhält man 60,3 g eines farblosen Pulvers, das einen Schmelzpunkt von 28°C besitzt.

Elementaranalyse:

Berechnet: C 77,79 %; H 9,79 %; N 3,78 %
Gefunden: C 77,55 %; H 9,85 %; N 3,76 %

Beispiel 6:

A) Herstellung von 3-(3-Cyclohexyl-4-hydroxy-5-methylphenyl)propionsäuremethylester

95,1 g 2-Cyclohexyl-6-methylphenol; 5,6 g 50%-ige wässrige Kaliumhydroxidlösung und 30 ml Toluol werden unter Stickstoff vorgelegt und auf 140°C erhitzt, wobei Toluol/Wasser azeotrop abdestilliert wird. Dann wird bis zu einem Druck von 300 mbar evakuiert und das Reaktionsgemisch bei diesem Druck eine Stunde bei 140°C gehalten. Anschliessend werden bei 120°C innerhalb von 2 Stunden 47,4 g Acrylsäuremethylester zugetropft und das Gemisch wird 8 Stunden bei 120°C gehalten. Danach wird die abgekühlte Lösung in Toluol aufgenommen und mit 10%-iger Salzsäure und anschliessend mit Wasser gewaschen. Nach Aufarbeitung erhält man 129,6 g Rohprodukt. Nach der Destillation fällt ein farbloses Oel an, das einen Siedepunkt von 176°C/0,03 mbar besitzt.

Elementaranalyse:

Berechnet: C 73,88 %; H 8,75 %
Gefunden: C 73,60 %; H 8,68 %

B) Herstellung von 3-(3-Cyclohexyl-4-hydroxy-5-methylphenyl)propionsäureoctadecylester

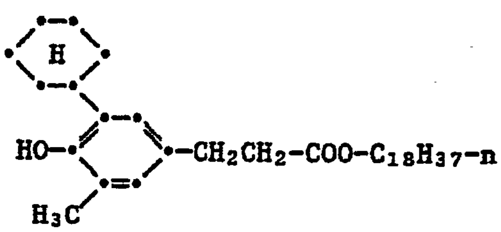

27,6 g 3-(3-Cyclohexyl-4-hydroxy-5-methylphenyl)propionsäuremethylester und 27,1 g Octadecanol werden, wie in Beispiel 2 beschrieben, unter Stickstoff auf 80°C erhitzt. Nach Zugabe von 0,1 g Lithiumamid wird das Reaktionsgemisch 10 Stunden auf 150°C erhitzt. Das entstehende Methanol wird laufend abdestilliert. Man erhält 30,2 g Rohprodukt, welches als leicht gelbliches Oel vorliegt und säulenchromatographisch gereinigt werden kann.

Elementaranalyse:

Berechnet: C 79,32 %; H 11,36 %
Gefunden: C 79,22 %; H 11,26 %

$^1$H-NMR:

Ester-$CH_2$-Signal in $CDCl_3$:
$\delta$ = 4,05 ppm (Triplett; Kupplungskonstante J = 6,5 Hz)
($\delta$ bezieht sich auf TMS = 0)

Beispiel 7: Herstellung von 1,6-Bis[3-(3-cyclohexyl-4-hydroxy-5-methylphenyl)propionyloxy]hexan

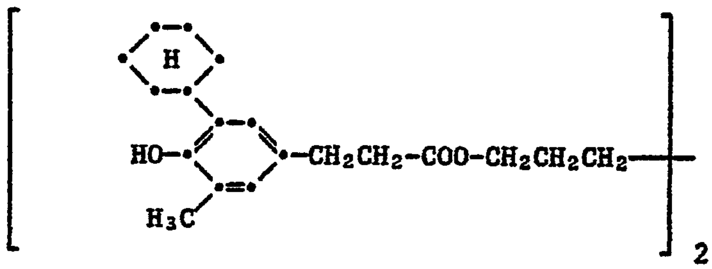

45,54 g 3-(3-Cyclohexyl-4-hydroxy-5-methylphenyl)propionsäuremethylester; 9,69 g 1,6-Hexandiol und 0,2 g Dibutylzinnoxid werden, wie in Beispiel 2 beschrieben, 24 Stunden auf 140°C erwärmt, wobei das entstehende Methanol abdestilliert. Die Ausbeute an Rohprodukt beträgt 49,1 g. Nach chromatographischer Reinigung erhält man ein gelbliches Oel.

Elementaranalyse:

Berechnet: C 75,21 %; H 8,97 %
Gefunden: C 75,02 %; H 9,04 %

$^1$H-NMR:

Ester-$CH_2$-Signal in $CDCl_3$:
$\delta = 4,06$ ppm (Triplett; Kopplungskonstante J= 7 Hz)
($\delta$ bezieht sich auf TMS = 0)

Beispiel 8: Herstellung von 1,8-Bis[3-(3-cyclohexyl-4-hydroxy-5-methylphenyl)propionyloxy]-3,6-dioxaoctan

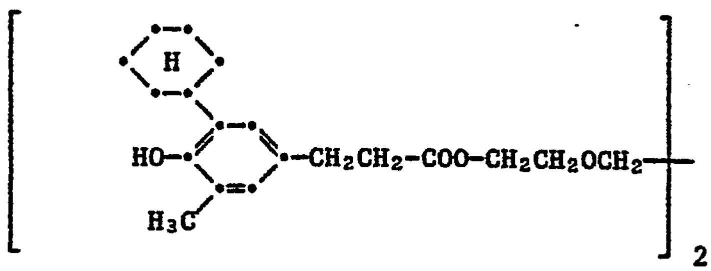

43,26 g 3-(3-Cyclohexyl-4-hydroxy-5-methylphenyl)propionsäuremethylester; 11,7 g Triethylenglykol und 0,2 g Dibutylzinnoxid werden, wie in Beispiel 2 beschrieben, 24 Stunden auf 150°C erhitzt, wobei das entstehende Methanol abdestilliert. Nach Aufarbeitung erhält man ein gelbliches Harz.

Elementaranalyse:

Berechnet: C 71,44 %; H 8,52 %
Gefunden: C 71, 25 %; H 8,52 %

$^1$H-NMR:

Ester-$CH_2$-Signal in $CDCl_3$:
$\delta = 4,25$ ppm (Triplett; Kopplungskonstante J = 5 Hz)
($\delta$ bezieht sich auf TMS = 0)

Beispiel 9: Herstellung von 1,5-Bis[3-(3,5-dicyclohexyl-4-hydroxyphenyl)propionyloxy]-3-thiapentan

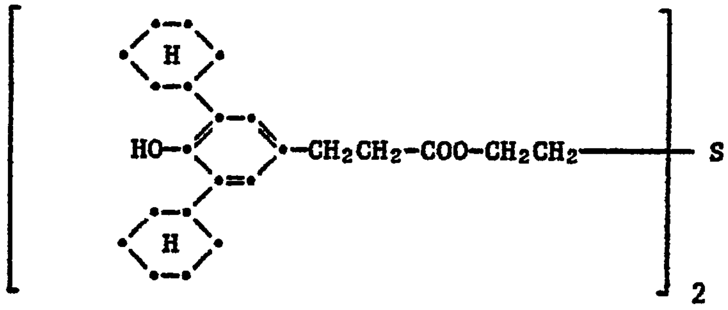

0,2 Mol 3-(3,5-Dicyclohexyl-4-hydroxyphenyl)propionsäuremethylester; 0,1 Mol 1,5-Dihydroxy-3-thiapentan und 2 ml Tetrabutyltitanat werden, wie in Beispiel 2 beschrieben, 8 Stunden auf 150°C erhitzt, wobei das entstehende Methanol abdestilliert. Nach Aufarbeitung beträgt die Ausbeute an Produkt 25,5 % der Theorie.

$^1$H-NMR:

Ester-$CH_2$-Signal in $CDCl_3$:
$\delta$ = 4,21 ppm (Triplett; Kopplungskonstante J = 7 Hz)
($\delta$ bezieht sich auf TMS = 0)

Massenspektrum (FD-MS; Angabe in m/z):

746 (Molekülionenpeak)

Beispiel 10: Herstellung von 1,5-Bis[3-(3-cyclohexyl-4-hydroxy-5-methylphenyl)propionyloxy]-3-thiapentan

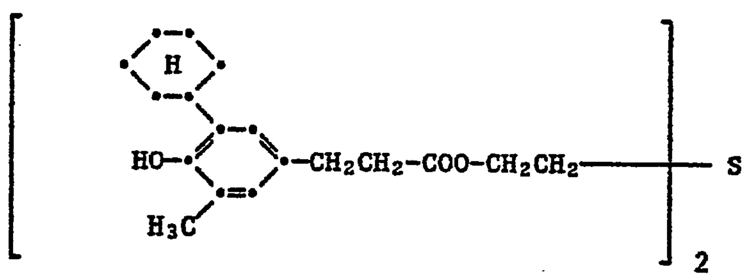

0,1 Mol 3-(3-Cyclohexyl-4-hydroxy-5-methylphenyl)propionsäuremethylester; 0,05 Mol 1,5-Dihydroxy-3-thiapentan und 0,05 g Dibutylzinnoxid werden, wie in Beispiel 2 beschrieben, 18 Stunden auf 160°C erhitzt, wobei das entstehende Methanol abdestilliert. Nach Aufarbeitung beträgt die Ausbeute an Produkt 25,1 % der Theorie.

$^1$H-NMR:

Ester-$CH_2$-Signal in $CDCl_3$:
$\delta$ = 4,21 ppm (Triplett; Kopplungskonstante J = 7 Hz)
($\delta$ bezieht sich auf TMS = 0)

Massenspektrum (Angabe in m/z):

610 (Molekülionenpeak)

In den Beispielen 11-14 werden die folgenden Abkürzungen verwendet:

DSTDP: Distearyl-3,3'-thiodipropionat
DLTDP: Dilauryl-3,3'-thiodipropionat
DODS: Dioctadecyldisulfid
DTPH: 3-Dodecylmercaptopropionsäure
DTPCa: Calciumsalz der 3-Dodecylmercaptopropionsäure

Beispiel 11:

A) Polypropylenpulver (Schmelzindex bei 230°C und einer Prüfkraft von 2,16 kp: 2,3 g/10 min) enthaltend 0,1 % Calciumstearat wird mit den in der nachstehenden Tabelle Ia aufgeführten Additiven gemischt und anschliessend in einem Brabender Plastographen bei 200°C 10 Minuten geknetet. Die so erhaltene Masse wird in einer Presse mit einer Oberflächentemperatur von 260°C zu 1 mm dicken Platten gepresst, aus denen Streifen von 1 cm Breite und 8,5 cm Länge gestanzt werden. Von jeder Platte werden mehrere solcher Streifen in einen auf 135°C bzw. 149°C geheizten Umluftofen gehängt und in regelmässigen Zeitabständen beobachtet. Die oxidative Zersetzung dieser Streifen lässt sich an einer kreisartig beginnenden Gelbverfärbung erkennen. Ein Mass für die Stabilität der Probe ist die Zeitdauer bis zur Zersetzung.

Tabelle Ia:

| Temperatur | Stabilisator | Tage bis zur Zersetzung |
|---|---|---|
| 135°C | ohne | 1 |
| | 0,3 % DSTDP | 42 |
| | 0,1 % Beispiel 1B + 0,3 % DSTDP | 206 |
| 149°C | ohne | <1 |
| | 0,3 % DSTDP | 8 |
| | 0,1 % Beispiel 1B + 0,3 % DSTDP | 34 |
| | 0,1 % Beispiel 2 + 0,3 % DSTDP | 90 |
| | 0,1 % Beispiel 3 + 0,3 % DSTDP | 53 |
| | 0,1 % Beispiel 4 + 0,3 % DSTDP | 104 |
| | 0,1 % Beispiel 6B + 0,3 % DSTDP | 65 |
| | 0,1 % Beispiel 7 + 0,3 % DSTDP | 78 |
| | 0,1 % Beispiel 8 + 0,3 % DSTDP | 58 |
| | 0,1 % Beispiel 9 + 0,3 % DSTDP | 98 |
| | 0,1 % Beispiel 10 + 0,3 % DSTDP | 88 |

B) Die nach Beispiel 11A hergestellten Proben werden bei einer Temperatur von 90°C 6 Wochen mit Wasser behandelt und dann der oben beschriebenen Prüfung im Umluftofen unterworfen. Die Ergebnisse sind in der Tabelle Ib zusammengestellt.

Tabelle Ib:

| Stabilisator | Temperatur | Tage bis zur Zersetzung |
|---|---|---|
| 0,1 % Beispiel 1B + 0,3 % DSTDP | 135°C | 215 |
| | 149°C | 26 |

Beispiel 12:

A) Die nach Beispiel 11A hergestellten Proben werden in destilliertes Wasser getaucht und dort bei 90°C aufbewahrt. Das Wasser wird jede Woche erneuert. Die Verfärbung der Proben wird nach 4, 6 und 12 Wochen visuell geprüft, wobei 5 farblos und 1 stark verfärbt bedeutet. Die Ergebnisse sind in Tabelle IIa zusammengefasst.

Tabelle IIa:

| Stabilisator | Zeit in Wochen | Verfärbung |
|---|---|---|
| 0,1 % Beispiel 1B + 0,3 % DSTDP | 0<br>4<br>6<br>12 | 5<br>5<br>5<br>5 |

B) Die nach Beispiel 11A hergestellten Proben werden 200 Stunden in einem Belichtungsgerät (Xenotest 150) belichtet. Das Ergebnis wird in Tabelle IIb wiedergegeben.

Tabelle IIb:

| Stabilisator | Anfangszustand | nach 200 Stunden im Xenotest 150 |
|---|---|---|
| 0,1 % Beispiel 1B + 0,3 % DSTDP | 5 | 5 |

Beispiel 13: Es wird die im Beispiel 11A beschriebene Prüfmethode benutzt. Die Ergebnisse sind in Tabelle III zusammengefasst.

Tabelle III:

| Stabilisator | Tage bis zur Zersetzung bei einer Temperatur von | |
|---|---|---|
| | 149°C | 135°C |
| ohne Stabilisator | <1 | 1 |
| 0,35 % DSTDP | 8 | 45 |
| 0,05 % Beispiel 1B + 0,35 % DSTDP | 34 | 334 |
| 0,35 % DLTDP | 2 | 16 |
| 0,05 % Beispiel 1B + 0,35 % DLTDP | 24 | 93 |
| 0,35 % DODS | <1 | 1 |
| 0,05 % Beispiel 1B + 0,35 % DODS | 97 | 310 |

Beispiel 14:

100 Teile Polypropylenpulver (Schmelzindex bei 230°C und einer Prüfkraft von 2,16 kp: 2,3 g/10 min) enthaltend 0,1 % Calciumstearat werden mit den in Tabelle IV aufgeführten Additiven homogen vermischt. Die erhaltenen Gemische werden 5x hintereinander in einem Einschneckenextruder bei maximal 260°C bzw. maximal 280°C (Temperatur der Austragszone) und 100 Umdrehungen pro Minute extrudiert und granuliert. Jeweils nach der ersten, dritten und fünften Extrusion wird der Schmelzindex des Materials bei 230°C und einer Prüfkraft von 2,16 kp ermittelt. Die Ergebnisse sind in Tabelle IV zusammengefasst. Der Abbau des Materials äussert sich in einem Ansteigen des Schmelzindex.

Tabelle IV:

a) Extrusionstemperatur 200°C/220°C/240°C/260°C

| Stabilisator | Schmelzindex bei 230°C und 2,16 kp in g/10 Minuten | | |
|---|---|---|---|
| | 1. Extrusion | 3. Extrusion | 5. Extrusion |
| ohne Stabilisator | 10,5 | 22,3 | 36,0 |
| 125 ppm Beispiel 1B + 875 ppm DTPH | 3,6 | 4,5 | 5,2 |
| 125 ppm Beispiel 1B + 875 ppm DTPCa | 3,8 | 4,6 | 5,7 |
| 125 ppm Beispiel 1B + 875 ppm DODS | 4,5 | 5,7 | 6,7 |

b) Extrusionstemperatur 260°C/270°C/280°C/280°C

| Stabilisator | Schmelzindex bei 230°C und 2,16 kp in g/10 Minuten | | |
|---|---|---|---|
| | 1. Extrusion | 3. Extrusion | 5. Extrusion |
| ohne Stabilisator | 15,2 | 142 | |
| 125 ppm Beispiel 1B + 875 ppm DTPH | 4,3 | 7,5 | 12,1 |
| 125 ppm Beispiel 1B + 875 ppm DTPCa | 4,5 | 13,7 | 23,6 |
| 125 ppm Beispiel 1B + 875 ppm DODS | 4,7 | 7,9 | 11,4 |

**Patentansprüche**

1. Verbindungen der Formel I,

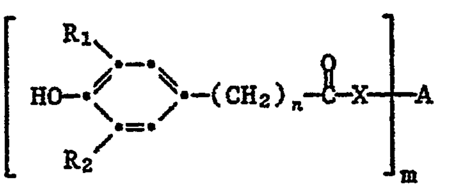

(I)

worin $R_1$ und $R_2$ unabhängig voneinander unsubstituiertes oder durch $C_1$-$C_3$-Alkyl substituiertes $C_5$-$C_7$-Cycloalkyl sind und $R_2$ ferner $C_1$-$C_{12}$-Alkyl, Phenyl, unsubstituiertes oder im Phenylring durch -OH und/oder $-OCH_3$ und/oder $C_1$-$C_{12}$-Alkyl substituiertes $C_7$-$C_{10}$-Phenylalkyl bedeutet, X Sauerstoff oder $-N(R_3)$- ist, $R_3$ Wasserstoff, $C_1$-$C_4$-Alkyl oder Phenyl bedeutet, n 0, 1 oder 2 ist, m eine ganze Zahl zwischen 1 und 4 bedeutet und wenn m 1 ist, A $C_8$-$C_{20}$-Alkyl bedeutet, wenn m 2 ist, A $C_2$-$C_{18}$-Alkylen oder durch -O-, -S-, $-N(R_3)$- oder -NH-COCO-NH- unterbrochenes $C_2$-$C_{18}$-Alkylen oder wenn X $-N(R_3)$- ist, zusätzlich eine direkte Bindung oder eine Gruppe der Formel II, III oder IV bedeutet,

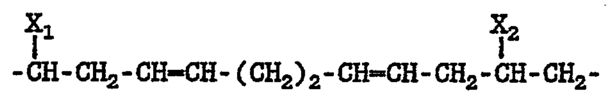

(II)

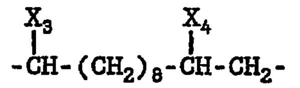

(III)

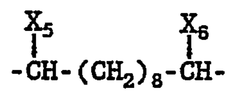

(IV)

worin $X_1$ $C_1$-$C_{12}$-Alkyl, Cyclohexyl, Phenyl, Benzyl oder Tetrahydrofuryl ist, $X_2$ und $X_4$ $C_1$-$C_{12}$-Alkyl sind, $X_3$ $C_1$-$C_{12}$-Alkyl, Cyclohexyl, Phenyl, durch $C_1$-$C_4$-Alkyl und/oder -OH substituiertes Phenyl, Piperidyl oder Tetrahydrofuryl bedeutet und $X_5$ und $X_6$ unabhängig voneinander $C_1$-$C_{12}$-Alkyl, Cyclohexyl, Benzyl, Phenyl, durch $C_1$-$C_4$-Alkyl und/oder -OH substituiertes Phenyl oder Naphthyl sind, wenn m 3 ist, A einen trivalenten aliphatischen Kohlenwasserstoffrest mit 3 bis 7 Kohlenstoffatomen bedeutet und wenn m 4 ist, A einen tetravalenten aliphatischen Kohlenwasserstoffrest mit 4 bis 10 Kohlenstoffatomen bedeutet.

2. Verbindungen gemäss Anspruch 1, worin $X_1$ Phenyl oder Tetrahydrofuryl ist, $X_2$ und $X_4$ $C_1$-$C_4$-Alkyl sind, $X_3$ $C_1$-$C_4$-Alkyl, Cyclohexyl, Phenyl, Piperidyl oder Tetrahydrofuryl bedeutet und $X_5$ und $X_6$ unabhängig voneinander $C_1$-$C_4$-Alkyl oder Cyclohexyl sind.

3.Verbindungen gemäss Anspruch 1, worin für den Fall m = 2, A $C_2$-$C_{18}$-Alkylen oder durch -O-, -S-, -N($R_3$)- oder -NH-COCO-NH- unterbrochenes $C_2$-$C_{18}$-Alkylen oder wenn X -N($R_3$)- ist, zusätzlich eine direkte Bindung bedeutet.

4. Verbindungen gemäss Anspruch 1, worin $R_1$ und $R_2$ unabhängig voneinander unsubstituiertes oder durch $C_1$-$C_3$-Alkyl substituiertes $C_5$-$C_7$-Cycloalkyl sind und für den Fall m = 2, A $C_2$-$C_{18}$-Alkylen oder durch -O-, -S-, -N($R_3$)- oder -NH-COCO-NH- unterbrochenes $C_2$-$C_{18}$-Alkylen oder wenn X -N($R_3$)- ist, zusätzlich eine direkte Bindung bedeutet.

5. Verbindungen gemäss Anspruch 1, worin n 2 ist.

6. Verbindungen gemäss Anspruch 1, worin X Sauerstoff oder -NH- bedeutet und für den Fall m = 1, A $C_{12}$-$C_{18}$-Alkyl bedeutet und für den Fall m = 2, A $C_2$-$C_6$-Alkylen oder durch -O-, -S-, -NH- oder -NH-COCO-NH- unterbrochenes $C_2$-$C_6$-Alkylen oder wenn X -NH- ist, eine direkte Bindung bedeutet.

7. Verbindungen gemäss Anspruch 1, worin X Sauerstoff oder -NH- ist und für den Fall m = 2, A 2,2-Dimethyltrimethylen,
$-(CH_2)_2-S-(CH_2)_2-$, $-(CH_2)_2-O-(CH_2)_2-O-(CH_2)_2-$,
$-(CH_2)_2-NH-COCO-NH-(CH_2)_2-$, Hexamethylen oder wenn X -NH- ist, eine direkte Bindung bedeutet.

8. Verbindungen gemäss Anspruch 1, worin $R_1$ Cyclohexyl ist und $R_2$ Cyclohexyl oder Methyl bedeutet.

9. Verbindungen gemäss Anspruch 1, worin $R_1$ und $R_2$ Cyclohexyl sind.

10. Verbindungen gemäss Anspruch 1, worin X Sauerstoff ist.

11. Verbindungen gemäss Anspruch 1, worin $R_1$ Cyclohexyl ist, $R_2$ Cyclohexyl oder Methyl bedeutet, X Sauerstoff oder -NH- ist, n 2 bedeutet und m 1, 2 oder 4 ist und wenn m 1 ist, A Octadecyl bedeutet, wenn m 2 ist, A $-(CH_2)_2-S-(CH_2)_2-$, $-(CH_2)_2-O-(CH_2)_2-O-(CH_2)_2-$ oder Hexamethylen bedeutet und wenn m 4 ist, A $C(CH_2-)_4$ bedeutet.

12. Die Verbindungen n-Octadecyl-3-(3,5-dicyclohexyl-4-hydroxyphenyl)propionat, 1,6-Bis[3-(3,5-dicyclohexyl-4-hydroxyphenyl)propionyloxy]hexan und Tetrakis [3-(3,5-dicyclohexyl-4-hydroxyphenyl)-propionyloxymethyl]methan gemäss Anspruch 1.

13. Organisches Material, enthaltend mindestens eine Verbindung der Formel I gemäss Anspruch 1.

14. Organisches Material gemäss Anspruch 13, enthaltend als zusätzliche Komponente einen Thiosynergisten.

15. Organisches Material gemäss Anspruch 13, dadurch gekennzeichnet, dass das organische Material ein Polyolefin ist.

16. Verwendung von Verbindungen der Formel I gemäss Anspruch 1 zum Stabilisieren von organischem Material gegen thermooxidativen und/oder lichtinduzierten Abbau.

**Claims**

1. A compound of formula I

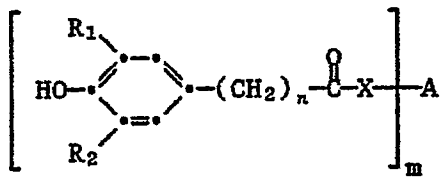 (I)

in which each of $R_1$ and $R_2$ independently of the other is $C_5$–$C_7$cycloalkyl which is unsubstituted or substituted by $C_1$–$C_3$alkyl, and $R_2$ is also $C_1$–$C_{12}$alkyl, phenyl, or $C_7$–$C_{10}$phenylalkyl which is unsubstituted or substituted at the phenyl ring by –OH and/or $–OCH_3$ and/or $C_1$–$C_{12}$alkyl, X is oxygen or $–N(R_3)–$, $R_3$ is hydrogen, $C_1$–$C_4$alkyl or phenyl, n is 0, 1 or 2, m is an integer between 1 and 4, and, if m is 1, A is $C_8$–$C_{20}$alkyl, if m is 2, A is $C_2$–$C_{18}$alkylene or $C_2$–$C_{18}$alkylene which is interrupted by –O–, –S–, $–N(R_3)–$ or –NH–COCO–NH–, or if X is $–N(R_3)–$ A is additionally a direct bond or a group of formula II, III or IV

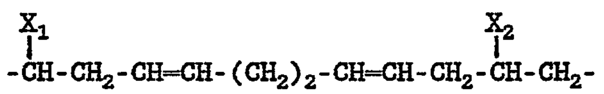 (II)

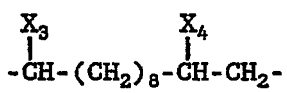 (III)

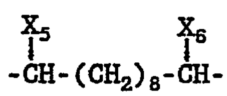 (IV)

in which $X_1$ is $C_1$–$C_{12}$alkyl, cyclohexyl, phenyl, benzyl or tetrahydrofuryl, $X_2$ and $X_4$ are $C_1$–$C_{12}$alkyl, $X_3$ is $C_1$–$C_{12}$alkyl, cyclohexyl, phenyl, phenyl which is substituted by $C_1$–$C_4$alkyl and/or –OH, or is piperidyl or tetrahydrofuryl, and each of $X_5$ and $X_6$ independently of the other is $C_1$–$C_{12}$alkyl, cyclohexyl, benzyl, phenyl, phenyl which is substituted by $C_1$–$C_4$alkyl and/or –OH, or is naphthyl, if m is 3, A is a trivalent aliphatic hydrocarbon radical containing 3 to 7 carbon atoms, and, if m is 4, A is a tetravalent aliphatic hydrocarbon radical containing 4 to 10 carbon atoms.

2. A compound according to claim 1, in which $X_1$ is phenyl or tetrahydrofuryl, $X_2$ and $X_4$ are $C_1$–$C_4$alkyl, $X_3$ is $C_1$–$C_4$alkyl, cyclohexyl, phenyl, piperidyl or tetrahydrofuryl and each of $X_5$ and $X_6$ independently of the other is $C_1$–$C_4$alkyl or cyclohexyl.

3. A compound according to claim 1, in which if m is 2, A is $C_2$–$C_{18}$alkylene or $C_2$–$C_{18}$alkylene which is interrupted by –O–, –S–, $–N(R_3)–$ or –NH–COCO–NH–, or, if X is $–N(R_3)–$, A is additionally a direct bond.

4. A compound according to claim 1, in which each of $R_1$ and $R_2$ independently of the other is $C_5$–$C_7$cycloalkyl which is unsubstituted or substituted by $C_1$–$C_3$alkyl, and, if m is 2, A is $C_2$–$C_{18}$-alkylene or $C_2$–$C_{18}$alkylene which is interrupted by –O–, –S–, $–N(R_3)–$ or –NH–COCO–NH–, or, if X is $–N(R_3)$, A is additionally a direct bond.

5. A compound according to claim 1, in which n is 2.

6. A compound according to claim 1, in which X is oxygen or –NH–, and if m is 1, A is $C_{12}$–$C_{18}$alkyl, and if m is 2, A is $C_2$–$C_6$alkylene or $C_2$–$C_6$alkylene which is interrupted by –O–, –S–, –NH–COCO–NH–, or, if X is –NH–, A is a direct bond.

7. A compound according to claim 1, in which X is oxygen or –NH–, and, if m is 2, A is 2,2-dimethyltrimethylene, $–(CH_2)_2–S–(CH_2)_2–$, $–(CH_2)_2–O–(CH_2)_2–O–(CH_2)_2–$, $–(CH_2)_2–NH–COCO–NH–(CH_2)_2–$ or hexamethylene, or if X is –NH–, A is a direct bond.

8. A compound according to claim 1, in which $R_1$ is cyclohexyl and $R_2$ is cyclohexyl or methyl.

9. A compound according to claim 1, in which $R_1$ and $R_2$ are cyclohexyl.

10. A compound according to claim 1, in which X is oxygen.

11. A compound according to claim 1, in which $R_1$ is cyclohexyl, $R_2$ is cyclohexyl or methyl, X is oxygen or –NH–, n is 2 and m is 1, 2 or 4, and, if m is 1, A is octadecyl, if m is 2, A is $–(CH_2)_2–S–(CH_2)_2–$, $–(CH_2)_2–O–(CH_2)_2–O–(CH_2)_2–$ or hexamethylene, and, if m is 4, A is $C(CH_2–)_4$.

12. A compound selected from the group consisting of n-octadecyl 3-(3,5-dicyclohexyl-4-hydroxyphenyl)propionate, 1,6-bis[3-(3,5-dicyclohexyl-4-hydroxyphenyl)propionyloxy]hexane and tetrakis[3-(3,5-dicyclohexyl-4-hydroxyphenyl)propionyloxymethyl]methane according to claim 1.

13. Organic material containing at least one compound of formula I according to claim 1.

14. Organic material according to claim 13 containing as additional compound a thiosynergist.

15. Organic material according to claim 13, wherein said organic material is a polyolefin.

16. Use of a compound of formula I according to claim 1 for stabilising organic material against thermooxidative and/or light-induced degradation.

**Revendications**

1. Composés répondant à la formule I:

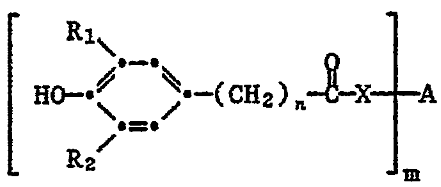

(I)

dans laquelle:

$R_1$ et $R_2$ représentent chacun, indépendamment l'un de l'autre, un cycloakyle en $C_5$–$C_7$ non substitué ou porteur d'un alkyle en $C_1$–$C_3$, $R_2$ pouvant en outre représenter un alkyle en $C_1$–$C_{12}$, un phényle, un phénylalkyle en $C_7$–$C_{10}$ non substitué ou portant, sur son noyau phényle, un –OH et/ou un –$OCH_3$ et/ou un alkyle en $C_1$–$C_{12}$,

X représente l'oxygène ou un radical –$N(R_3)$– dont le symbole $R_3$ représente l'hydrogène, un alkyle en $C_1$–$C_4$ ou un phényle,

n désigne un nombre égal à 0, à 1 ou à 2,

m désigne un nombre entier de 1 à 4, et

A représente:

– dans le cas où m est égal à 1, un alkyle en $C_8$–$C_{20}$,

– dans le cas où m est égal à 2, un alkylène en $C_2$–$C_{18}$, ou un alkylène en $C_2$–$C_{18}$ interrompu par –O–, –S–, –$N(R_3)$– ou –NH–COCO–NH–, ou encore, lorsque X représente un radical –$N(R_3)$–, A peut en outre représenter une liaison directe ou un radical répondant à l'une des formules II, III et IV:

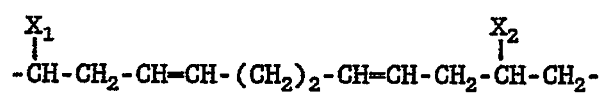

(II)

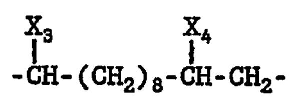

(III)

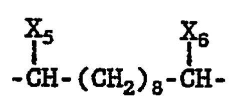

(IV)

dans lesquelles $X_1$ représente un alkyle en $C_1$–$C_{12}$, un cyclohexyle, un phényle, un benzyle ou un tétrahydrofuryle, $X_2$ et $X_4$ représentent chacun un alkyle $C_1$–$C_{12}$, $X_3$ représente un alkyle en $C_1$–$C_{12}$, un cyclohexyle, un phényle, un phényle porteur d'un alkyle en $C_1$–$C_4$ et/ou d'un –OH, un pipéridyle ou un tétrahydrofuryle, $X_5$ et $X_6$ représentent chacun, indépendamment l'un de l'autre, un alkyle $C_1$–$C_{12}$, un cyclohexyle, un benzyle, un phényle porteur d'un alkyle en $C_1$–$C_4$ et/ou d'un –OH, ou un naphtyle,

– dans le cas où m est égal à 3, un radical hydrocarboné aliphatique trivalent contenant de 3 à 7 atomes de carbone, et

– dans le cas où m est égal à 4, un radical hydrocarboné aliphatique quadrivalent contenant de 4 à 10 atomes de carbone.

2. Composés selon la revendication 1 dans lesquels $X_1$ représente un phényle ou un tétrahydrofuryle, $X_2$ et $X_4$ représentent chacun un alkyle en $C_1$–$C_4$, $X_3$ représente un alkyle en $C_1$–$C_4$, un cyclohexyle, un phényle, un pipéridyle ou un tétrahydrofuryle, et $X_5$ et $X_6$ représentent chacun, indépendamment l'un de l'autre, un alkyle en $C_1$–$C_4$ ou un cyclohexyle.

3. Composés selon la revendication 1 dans lesquels, l'indice m étant égal à 2, le symbole A représente un alkylène en $C_2$–$C_{18}$ ou un alkylène en $C_2$–$C_{18}$ interrompu par –O–, –S–, –$N(R_3)$– ou NH–COCO–NH–, ou, lorsque X représente –$N(R_3)$–, A peut en outre représenter une liaison directe.

4. Composés selon la revendication 1 dans lesquels $R_1$ et $R_2$ représentent chacun, indépendamment l'un de l'autre, un cycloalkyle en $C_5$–$C_7$ non substitué ou porteur d'un alkyle en $C_1$–$C_4$, et, l'indice m étant égal à 2, le symbole A représente un alkylène en $C_2$–$C_{18}$ ou un alkylène en $C_2$–$C_{18}$ interrompu par –O–, –S–, –N($R_3$)– ou –NH–COCO–NH–, ou, lorsque X représente –N($R_3$)–, A peut en outre représenter une liaison directe.

5. Composés selon la revendication 1 dans lesquels n est égal à 2.

6. Composés selon la revendication 1 dans lesquels X représente l'oxygène ou –NH– et A représente, dans le cas où m ést égal à 1, un alkyle en $C_2$–$C_{18}$ et, dans le cas où m est égal à 2, un alkylène en $C_2$–$C_6$ ou un alkylène en $C_2$–$C_6$ interrompu par –O–, –S–, –NH– ou –NH–COCO–NH–, ou encore, lorsque X représente –NH–, A peut aussi représenter une liaison directe.

7. Composés selon la revendication 1 dans lesquels X représente l'oxygène ou –NH– et A représente, dans le cas où m ést égal à 2, un radical diméthyl-2,2 triméthylène, $-(CH_2)_2-S-(CH_2)_2-$, $(CH_2)_2-O-(CH_2)_2-O-(CH_2)_2-$, $-(CH_2)_2-NH-COCO-NH-(CH_2)_2-$ ou hexaméthylène ou encore, lorsque X représente –NH–, A peut aussi représenter une liaison directe.

8. Composés selon la revendication 1 dans lesquels $R_1$ représente un cyclohexyle et $R_2$ un cyclohexyle ou un méthyle.

9. Composés selon la revendication 1 dans lesquels $R_1$ et $R_2$ représente un cyclohexyle.

10. Composés selon la revendication 1 dans lesquels X représente l'oxygène.

11. Composés selon la revendication 1 dans lesquels $R_1$ représente un cyclohexyle, $R_2$ un cyclohexyle ou un méthyle, X l'oxygène ou –NH–, n est égal à 2, m est égal à 1, à 2 ou à 4, et A représente, dans le cas où m est égal à 1, un octadécyle, dans le cas où m est égal à 2 un radical $-(CH_2)_2-S-(CH_2)_2-$, un radical $-(CH_2)_2-O-(CH_2)_2-O-(CH_2)_2-$ ou un radical hexaméthylène, et dans le cas où m est égal à 4 un radical $-(CH_2-)_4$.

12. Composés selon la revendication 1, en l'espèce le (dicyclohexyl-3,5 hydroxy-4 phényl)-3 propionate de n-octadécyle, le bis-[(dicyclohexyl-3,5 hydroxy-4 phényl)-3 propionyloxy]-1,6 hexane et le tétrakis [(dicyclohexyl-3,5 hydroxy-4 phényl)-3 propionyloxyméthyl]-méthane.

13. Matière organique contenant au moins un composé de formule I selon la revendication 1.

14. Matière organique selon la revendication 13 qui contient, comme composante supplémentaire, un agent de synergie sulfuré.

15. Matière organique selon la revendication 13 caractérisée en ce qu'elle est constituée d'une polyoléfine.

16. Application de composés de formule I selon la revendication 1 à la stabilisation d'une matière organique contre la dégradation thermo-oxydative et/ou photoinduite.